(19) Europäisches Patentamt
European Patent Office
Office européen des brevets

(11) Numéro de publication: **0 191 261**
**A1**

(12) # DEMANDE DE BREVET EUROPEEN

(21) Numéro de dépôt: **85420232.2**

(22) Date de dépôt: **17.12.85**

(51) Int. Cl.⁴: **B 29 C 33/64**, C 08 L 83/04
// (C08L83/04, 83:04)

(30) Priorité: **20.12.84 FR 8419510**

(43) Date de publication de la demande: **20.08.86**
**Bulletin 86/34**

(84) Etats contractants désignés: **AT BE CH DE FR GB IT LI LU NL SE**

(71) Demandeur: **RHONE-POULENC SPECIALITES CHIMIQUES, "Les Miroirs" 18, Avenue d'Alsace, F-92400 Courbevoie (FR)**

(72) Inventeur: **Macaigne, Louis, 5, rue Henri Bretonnet, F-78970 Mezieres-sur-Seine (FR)**
Inventeur: **Pouchol, Jean-Marie, 53, rue Villeroy, F-69003 Lyon (FR)**

(74) Mandataire: **Seugnet, Jean Louis et al, RHONE-POULENC INTERSERVICES Service Brevets Chimie Centre de Recherches de Saint-Fons B.P. 62, F-69192 Saint-Fons Cédex (FR)**

(54) **Compositions organopolysiloxaniques utilisables pour le traitement antiadhérent des parois des moules.**

(57) Compositions organopolysiloxaniques utilisables pour le traitement antiadhérent des parois des moules et comportant:

A) Une huile diorganopolysiloxanique comportant dans la chaine des radicaux méthyle, phénylalkyle et alkyle ayant de 7 à 15 atomes de carbone;

B) Une résine MQ

C) Un diluant organique.

La composition selon l'invention est utilisable pour le démoulage de produits moulés en caoutchouc, en résine et en matière plastique.

EP 0 191 261 A1

# COMPOSITIONS ORGANOPOLYSILOXANIQUES UTILISABLES POUR LE TRAITEMENT ANTIADHERENT DES PAROIS DES MOULES

La présente invention a pour objet de nouvelles compositions utilisables pour le traitement antiadhérent des parois des moules ; elles renferment des polymères organopolysiloxaniques qui forment un revêtement antiadhérent et facilitent ainsi le démoulage des produits moulés constitués de matériaux organiques tels que des caoutchoucs, des résines, des matières plastiques, des produits cellulaires.

Ces polymères présentent l'avantage de ne pas gêner le collage, la peinture ou le vernissage des produits moulés. Ils présentent également l'avantage d'adhérer avec efficacité aux matériaux constituant les moules ; il en résulte qu'un nombre élevé de démoulages peut être effectué avant qu'il soit nécessaire de traiter de nouveau les parois des moules.

Des polymères organopolysiloxaniques sont employés depuis de nombreuses années pour faciliter le démoulage d'objets en matériaux organiques. Certains de ces composés, malgré leur caractère antiadhérent, permettent la peinture ultérieure des produits moulés ; ils figurent en particulier dans les brevets français 1 340 398, 1 448 165 et 1 499 845.

Le brevet français 1 340 398 traite de diorganopolysiloxanes constitués de 10 à 90 moles % de motifs de formule $(C_6H_5X)CH_3SiO$ et 10 à 90 moles % de motifs de formule $CH_3(X')SiO$ dans lesquelles X est un radical alkylène de 2 à 3 atomes de C (carbone) et X' un radical alkyle également de 2 à 3 atomes de C.

Le brevet français 1 448 165 se rapporte à des diorganopolysiloxanes formés de motifs de formule $CH_3(Y)SiO$ et éventuellement de motifs de formule $CH_3(Y')SiO$ dans lesquelles Y est un radical alkyle de 8 à 20 atomes de carbone et Y' un radical alkyle de 1 à 7 atomes de C.

Le brevet français 1 499 845 traite de diorganopolysiloxanes formés de motifs de formule $CH_3(Z)SiO$ et de motifs de formule $CH_3(Z')SiO$ dans lesquelles Z est un radical alkyle d'au moins 7 atomes de C et Z' un radical phényl-2 propyle ou phényl-2 éthyle.

Un autre brevet français 1 570 178 enseigne l'emploi pour le démoulage de mousses de polyuréthanne, de diorganopolysiloxanes ayant une structure proche de celle des diorganopolysiloxanes venant d'être décrits. En effet, ils sont constitués d'au moins 50 moles % de motifs de formule $CH_3(W)SiO$, d'au plus 40 moles % de motifs de formule $C_6H_5-\underset{CH_3}{\underset{|}{CH}}-CH_2(CH_3)SiO$ ou de formule $C_6H_5CH_2CH_2(CH_3)SiO$ et d'au plus 10 moles % de motifs de formule $CH_3(W')SiO$ dans lesquelles W est un radical alkyle de 3 à 30 atomes de C, W' est un radical méthyle, éthyle, phényle, benzyle ou un enchainement polyether ; ils sont terminés à chaque extrémité de leur chaine par un radical hydroxyle ou un motif triorganosiloxy.

Ces diorganopolysiloxanes sont déposés à l'état liquide, après chaque démoulage, sur les parois des moules ; toutefois avant ce dépôt il est nécessaire d'appliquer un agent de démoulage classique tel qu'une cire, une résine silicone, un caoutchouc silicone.

Les diorganopolysiloxanes décrits dans les 4 brevets français précités 1 340 398, 1 448 165, 1 499 845 et 1 570 178 ne semblent pas perturber la peinture ou le collage des produits moulés ; ils présentent cependant l'inconvénient de ne pas s'accrocher efficacement aux parois des moules, de ce fait leur application sur ces parois doit être fréquemment renouvelée au cours des cycles de moulage-démoulage.

Des organopolysiloxanes d'une autre structure sont décrits dans le brevet américain 2 811 408. Ce sont des copolymères formés de motifs $(CH_3)_3SiO_{0,5}$ et $SiO_2$ répartis de manière à conduire à un rapport $CH_3/Si$ de 1 à 2,5 ; ils sont éventuellement associés à des organopolysiloxanes à chaine linéaire ou ramifiée. Le brevet enseigne l'emploi de ces polymères pour démouler efficacement des matériaux organiques ou organosiliciques ; il n'enseigne pas les moyens à mettre en oeuvre pour assurer la peinture ultérieure des produits moulés.

La présente invention propose de nouvelles compositions qui renferment des polymères organopolysiloxaniques ayant la propriété d'être antiadhérents, de bien s'accrocher aux parois des moules et de permettre la peinture et le collage ultérieurs des objets moulés.

Ces nouvelles compositions, utilisables pour le traitement antiadhérent des parois des moules, sont caractérisées par le fait qu'elles sont constituées de :

A) 100 parties d'une huile diorganopolysiloxanique de formule générale moyenne
$G(CH_3)_2Si[OSi(CH_3)R]_x[OSi(CH_3)_2]_yOSi(CH_3)_2G$ dans laquelle
- les symboles R identiques ou différents représentent un radical alkyle ayant de 7 à 15 atomes de C, un radical phénylalkyle dans lequel le radical alkyle a de 1 à 6 atomes de C, de préférence 2 et 3 atomes de C ;
- le symbole G a la signification du symbole R ou représente un radical hydroxyle, un radical méthyle ;
- le symbole x représente un nombre quelconque $\geqslant 6$ ;
- le symbole y représente zéro ou un nombre quelconque égalant au plus les 3/4 de la valeur représentée par le symbole x, la somme x + y ayant une valeur suffisante pour obtenir une viscosité de 50 à 5000 mPa.s à 25°C.

B) 15 à 80 parties d'un copolymère organopolysiloxanique formé de motifs de formule : $(CH_3)_3SiO_{0,5}$ et $SiO_2$ répartis de telle sorte que leur rapport molaire $(CH_3)_3SiO_{0,5}/SiO_2$ va de 0,4 à 1,2.

C) 200 à 2000 parties de diluants organiques inertes vis à vis des composés A) et B).

Les huiles diorganopolysiloxaniques A), comme le montre leur formule précitée, sont formées d'une succession de motifs $OSi(CH_3)R$ et éventuellement de motifs $OSi(CH_3)_2$ et sont bloquées en bout de chaine par des motifs $G(CH_3)_2SiO_{0,5}$. Une faible quantité d'autres motifs provenant par exemple des sous-produits formés au cours de la préparation des huiles A n'est pas exclue ; ainsi des motifs de formules $SiO_2$, $CH_3(H)SiO$, $CH_3SiO_{1,5}$, peuvent être présents, dans la proportion d'au plus 2 % de l'ensemble des motifs constituants les huiles A.

Les radicaux alkyles, représentés par le symbole R, ayant de 7 à 15 atomes de carbone peuvent être linéaires ou ramifiés. A titre

illustratif de radicaux linéaires peuvent être cités les radicaux n-heptyle, n-octyle, n-décyle, n-dodécyle, n-tétradécyle, n-pentadécyle.

A titre illustratif de radicaux ramifiés peuvent être cités les radicaux éthyl-2 hexyle, méthyl-3 octyle, méthyl-3 dodécyle, n-butyl-4 décyle.

Les radicaux phénylalkyles représentés également par le symbole R peuvent être choisis parmi les radicaux phényl-2 éthyle et phényl-2 n-propyle, phényl-2 isopropyle, phényl-4 n-butyle et phényl-6 n-hexyle.

Le symbole x représente un nombre entier ou fractionnaire $\geqslant 6$ de préférence $\geqslant 8$. Le symbole y représente zéro ou un nombre entier ou fractionnaire égalant au plus les 3/4, de préférence les 2/3, de la valeur de x ; et la somme x + y prend une valeur telle que la viscosité de l'huile s'étale de 50 à 5000 mPa.s à 25°C, de préférence 100 à 4500 mPa.s à 25°C.

A titre illustratif d'huiles A, englobées dans la formule générale précitée, peuvent être citées celles répondant aux formules ci-après :

P1 : $(CH_3)_3Si[OSi(CH_3)\text{n-octyle}]_{x1}OSi(CH_3)_3$

P2 : $(CH_3)_3Si[OSi(CH_3)CH_2CH_2C_6H_5]_{x2}OSi(CH_3)_3$

P3 : $(CH_3)_3Si[OSi(CH_3)\text{éthyl-2 hexyle}]_{x3}OSi(CH_3)_3$

P4 : $(CH_3)_3Si[OSi(CH_3)\text{n-décyle}]_{x4}[OSi(CH_3)\text{n-tétradécyle}]_{x5}$
$[OSi(CH_3)CH_2CH(CH_3)C_6H_5]_{x6}OSi(CH_3)_3$

P5 : $(CH_3)_2\text{n-octyle Si}[OSi(CH_3)\text{n-octyle}]_{x7}[OSi(CH_3)_2]_{y1}$
$OSi\ \text{n-octyle}(CH_3)_2$

Les symboles x1 à x7 et y1 représentent chacune une valeur telle qu'ils assurent aux polymères P1 à P5 les viscosités suivantes en mPa.s à 25°C.

P1 : 400 à 900 ; P2 : 500 à 950 ;
P3 : 300 à 800 ; P4 : 600 à 1200 ;
P5 : 450 à 1000

La préparation des huiles A est bien connue de l'homme de métier. Elle consiste dans la plupart des cas à faire réagir un organohydrogénopolysiloxane avec le ou les composés oléfiniques choisis en présence d'un catalyseur à base de platine.

L'organohydrogénopolysiloxane peut répondre à la formule générale :

$(CH_3)_3Si[OSi(CH_3)H]_x[OSi(CH_3)_2]_yOSi(CH_3)_3$

Il peut répondre également à la formule générale :

$H(CH_3)_2Si[OSi(CH_3)H]_x[OSi(CH_3)_2]_yOSi(CH_3)_2H$

Dans ces formules les symboles x et y ont la même signification que celle donnée lors de la description de la formule générale des huiles A.

Les conditions de la réaction d'addition figurent en particulier dans les brevets français 1 448 165, 1 461 931, 1 499 845 et 1 570 170.

Pour obtenir des huiles A bloquées à chaque extrémité de leur chaine par un radical hydroxyle lié à l'atome de silicium il est préférable d'utiliser une autre méthode que celle mettant en oeuvre une réaction d'addition. On peut partir d'organochlorosilanes de formule $R(CH_3)SiCl_2$, en mélange ou non avec $(CH_3)_2SiCl_2$ ; on les hydrolyse et réarrange les hydrolysats en présence d'un catalyseur acide tel que l'acide trifluorométhane sulfonique ou d'un catalyseur basique tel que la potasse.

La préparation des organochlorosilanes de formule $R(CH_3)SiCl_2$ peut être effectuée par addition d'un silane de formule $H(CH_3)SiCl_2$ à une oléfine conduisant à R, en présence d'un dérivé du platine. Le symbole R de la formule $R(CH_3)SiCl_2$ est le même que celui figurant dans la formule générale des huiles A.

Les copolymères organopolysiloxaniques B dénommés couramment résines MQ sont introduits dans les compositions conformes à l'invention, à raison de 15 à 80 parties, de préférence 17 à 75 parties, pour 100 parties des huiles A ; ils sont formés de motifs $(CH_3)_3SiO_{0,5}$ et $SiO_2$, dont le rapport molaire $(CH_3)_3SiO_{0,5}/SiO_2$ s'échelonne de 0,4/1 à 1,2/1, de préférence 0,45/1 à 1,1/1. Ils sont commercialisés par les fabricants de silicones et peuvent être aisément fabriqués en suivant des méthodes éprouvées.

En particulier, ils peuvent être préparés :

- à partir de triméthylchlorosilane et/ou d'hexaméthyldisiloxane, et de silicate de sodium selon le procédé indiqué dans le brevet français 1 046 736,

- ou bien à partir du triméthylchlorosilane et du silicate d'éthyle selon le procédé indiqué dans le brevet français 1 134 005.

On opère au sein de diluants inertes et conserve les copolymères dans ces diluants. Il est possible toutefois de remplacer en totalité ou en partie, les diluants employés au cours de leur préparation, par d'autres diluants de points d'ébullition plus élevés.

Comme diluants appropriés peuvent être cités :

- des hydrocarbures aromatiques halogénés ou non, tels que le toluène, le xylène, le cumène, le chlorobenzène, l'orthodichlorobenzène ;

- des hydrocarbures aliphatiques halogénés ou non tels que l'heptane, le cyclohexane, le méthylcyclohexane, le trichloroéthylène, le perchloroéthylène, le trichloroéthane, le tétrachloroéthane ;

- les coupes pétrolières constituées d'hydrocarbures aliphatiques et/ou aromatiques, passant par exemple entre 90°C et 280°C à la pression atmosphérique ;

- les esters aliphatiques ou aromatiques tels que l'acétate de n-butyle.

Le taux des copolymères B dans les diluants peut être quelconque, il est recommandé cependant d'employer des solutions contenant de 30 à 75 % en poids des copolymères. Ces copolymères possèdent un taux variable de radicaux hydroxyles liés aux atomes de silicium, ce taux s'échelonne généralement de 0,1 à 6 % ; de préférence on emploie des copolymères ayant des taux de 0,5 à 5 %.

Une partie des copolymères B peut être modifiée par l'introduction de motifs vinylés de formule $CH_2=CH(CH_3)_aSiO_{\frac{3-a}{2}}$, le symbole a représentant 1 ou 2.

La quantité introduite de motifs vinylés est telle qu'elle représente 0,2 à 8 %, de préférence 0,3 à 7 %, du poids des copolymères B modifiés, donc constitués des motifs $(CH_3)_3SiO_{0,5}$, $SiO_2$ et $CH_2=CH(CH_3)_aSiO_{\frac{3-a}{2}}$, le rapport molaire $(CH_3)_3SiO_{0,5}/SiO_2$ ayant toujours la valeur précitée c'est à dire allant de 0,4 à 1,2.

Ces copolymères B modifiés, appelés par la suite copolymères

B1, peuvent être préparés en suivant les procédés décrits ci-avant pour la préparation des copolymères B ; il est toutefois indispensable d'ajouter aux divers réactifs, le chlorosilane de formule $CH_2=CH(CH_3)_2SiCl$ ou celui de formule $CH_2=CH(CH_3)SiCl_2$.

Les copolymères B1 sont conservés dans des diluants inertes à une concentration identique à celle prévue pour les copolymères B, c'est à dire de 30 à 75 % en poids ; ils peuvent renfermer également des radicaux hydroxyles, liés aux atomes de silicium, à un taux de l'ordre de 0,1 à 6 %.

Les diluants C sont utilisés à raison de 200 à 2000 parties de préférence 250 à 1950 parties, pour 100 parties des huiles A ; ce sont des composés organiques bien connus, peu toxiques ou non toxiques et inertes vis à vis des huiles A et des copolymères B et/ou B1 ; ils peuvent être identiques aux diluants déjà cités, utilisés pour la préparation et la dilution des copolymères B et/ou B1.

Les compositions organopolysiloxaniques conformes à l'invention sont préparées par simple mélange, dans un ordre quelconque, des huiles A, des copolymères B et/ou B1 et des diluants C.

Les copolymères B et/ou B1 sont incorporés de préférence sous forme de leur dilution. Dans ce cas on complète avec les diluants C de manière à atteindre les quantités choisies c'est à dire 200 à 1000 parties de diluants C pour 100 parties des huiles A et 15 à 80 parties des copolymères B et/ou B1.

Il est possible d'éliminer les diluants des dilutions des copolymères B et/ou B1 en mélangeant tout d'abord des huiles A avec ces dilutions et en éliminant ensuite les diluants par chauffage sous une pression inférieure à la pression atmosphérique ; il faut cependant opérer avec soin pour éviter la formation de particules gélifiées.

Les compositions conformes à l'invention sont stables au stockage pendant au moins 1 an en récipients fermés. Ces compositions qui sont en fait des solutions des polymères A et B et/ou B1 dans les diluants C, peuvent être utilisées telles quelles. Elles peuvent être également utilisées à l'état plus dilué par addition d'autres quantités de diluants. Dans ce cas, la concentration des

polymères A et B et/ou B1 au moment de l'application des solutions sur les parois des moules peut ainsi varier dans un large domaine de valeurs, par exemple de 0,1 % à 80 % en poids.

L'application sur les parois des moules est effectuée au moyen des techniques usuelles telles que pulvérisation, imprégnation à la brosse, au tampon... La quantité déposée des polymères A et B après évaporation des diluants doit être suffisante pour assurer la formation d'un revêtement uniforme d'épaisseur de l'ordre de 0,1 à 10 µm, de préférence 0,2 à 8 µm.

Les moules ainsi enduits (constitués de matériaux peu déformables tels que métaux, résines renforcées) peuvent être utilisés pour le moulage de matériaux les plus divers tels que résines époxydes, polyesters, silicones, polyimides, polycarbonates, polyuréthannes, mélamines-formols, mousses de polyuréthanne, mousses phénoliques.

Les produits moulés, au moyen des moules précédents, peuvent être aisément recouverts de peinture ou de vernis ; les revêtements déposés s'étalent d'une manière uniforme et continue à la surface des produits moulés. Par ailleurs, l'assemblage par collage des produits moulés, entre eux ou avec d'autres matériaux organiques, peut être réalisé sans difficulté ; on peut ainsi coller des plaques de caoutchoucs synthétique ou naturel sur des plaques moulées en résines de polyuréthanne.

EXEMPLE

On introduit dans un réacteur :

- 20 parties d'une solution xylénique contenant 60 % d'un copolymère résineux organopolysiloxanique formé de motifs de formules $(CH_3)_3SiO_{0,5}$ et $SiO_2$, dont leur rapport molaire $(CH_3)_3SiO_{0,5}/SiO_2$ est de 0,6 et ayant 2,5 % en poids de radicaux hydroxyles liés aux atomes de silicium ;

- 20 parties d'une huile méthyl(n-octyl)polysiloxanique bloquée à chaque extrémité de sa chaine par un motif triméthylsiloxy, de viscosité 750 mPa.s à 25°C ;

- 60 parties de trichloro-1,1,1 éthane.

L'ensemble est agité à la température ambiante pendant 10 minutes. La solution obtenue est limpide et elle est toujours dans le même état après un abandon dans un récipient fermé pendant 12 mois.

On dilue cette solution, qui renferme 32 % environ de polymères organopolysiloxaniques au moyen du trichloro-1,1,1 éthane, de manière à obtenir une solution à 16 % de polymères. La solution diluée est pulvérisée sur les parois d'un moule en acier étamé, d'une contenant de 300 ml. On laisse sécher à l'air ambiant pendant 10 minutes ; il reste un mince revêtement d'épaisseur 8 à 10 µm environ.

On coule dans le moule une composition formée par mélange de 71 g d'un p-p'diisocyanatodiphénylméthane technique contenant 30 % en poids de groupes N-C=O et 51,6 g d'un prémélange contenant des radicaux hydroxyles. Le prémélange est fabriqué à partir de :

- 100 g d'un polyol issu du saccharose d'indice d'hydroxyle 400 ;
- 0,2 g d'eau ;
- 1,1 g d'une dilution à 33 % dans le dipropylèneglycol de la triéthylènediamine ;
- 1 g de la diméthyléthanolamine ;
- 1 g d'un stabilisant du type copolymère à blocs polydiméthylsiloxane-polyalcoylèneglycol.

La composition s'expanse librement dans le moule et se transforme en une mousse rigide de densité 0,35 g/ml.

On démoule 30 minutes après le début de la coulée de la composition. On recommence la même opération de moulage-démoulage et constate qu'on obtient 6 objets moulés en mousse rigide avant qu'un commencement d'accrochage se produise sur les parois du moule.

On dépose par pulvérisation à la surface des objets moulés une couche d'épaisseur 20 µm environ, d'une peinture glycérophtalique; on ne remarque aucun défaut d'étalement de la peinture, celle-ci recouvre totalement la surface des objets moulés.

REVENDICATIONS

1 - Compositions organopolysiloxaniques utilisables pour le traitement antiadhérent des parois des moules, caractérisées en ce qu'elles sont constituées de :

A/ 100 parties d'une huile diorganopolysiloxanique de formule générale moyenne :

$G(CH_3)_2Si[OSi(CH_3)R]_x[OSi(CH_3)_2]_yOSi(CH_3)_2G$

dans laquelle :

- les symboles R identiques ou différents représentent un radical alkyle ayant de 7 à 15 atomes de C, un radical phénylalkyle dans lequel le radical alkyle a de 1 à 6 atomes de C ;
- le symbole G a la signification du symbole R ou représente un radical hydroxyle, un radical méthyle ;
- le symbole x représente un nombre quelconque $\geqslant 6$ ;
- le symbole y représente zéro ou un nombre quelconque égalant au plus les 3/4 de la valeur représentée par le symbole x, la somme x + y ayant une valeur suffisante pour obtenir une viscosité de 50 à 5000 mPa.s à 25°C.

B/ 15 à 80 parties d'un copolymère organopolysiloxanique formé de motifs de formule : $(CH_3)_3SiO_{0,5}$ et $SiO_2$, répartis de telle sorte que leur rapport molaire $(CH_3)_3SiO_{0,5}/SiO_2$ va de 0,4 à 1,2.

C/ 200 à 2000 parties de diluants organiques inertes vis à vis des composés A/ et B/

2 - Composition selon la revendication 1, caractérisée en ce que l'huile A/ est choisie parmi les huiles de formule :

P1 : $(CH_3)_3Si[OSi(CH_3)\text{n-octyle}]_{x1}OSi(CH_3)_3$

P2 : $(CH_3)_3Si[OSi(CH_3)CH_2CH_2C_6H_5]_{x2}OSi(CH_3)_3$

P3 : $(CH_3)_3Si[OSi(CH_3)\text{étnyl-2 hexyle}]_{x3}OSi(CH_3)_3$

P4 : $(CH_3)_3Si[OSi(CH_3)\text{n-décyle}]_{x4}[OSi(CH_3)\text{n-tétradécyle}]_{x5}$ $[OSi(CH_3)CH_2CH(CH_3)C_6H_5]_{x6}OSi(CH_3)_3$

P5 : $(CH_3)_2\text{n-octyle } Si[OSi(CH_3)\text{n-octyle}]_{x7}[OSi(CH_3)_2]_{y1}$ $OSi\text{ n-octyle}(CH_3)_2$

dans lesquelles les symboles x1 à x7 et y1 représentent

chacune une valeur telle qu'ils assurent aux polymères P1 à P5 les viscosités suivantes en mPa.s à 25°C.

P1 : 400 à 900 ; P2 : 500 à 950 ;

P3 : 300 à 800 ; P4 : 600 à 1200 ;

P5 : 450 à 1000

3 - Composition selon la revendication 1 ou 2, caractérisée en ce qu'au moins une partie des copolymères B sont modifiés par l'introduction de motifs vinylés de formule $CH_2{=}CH(CH_3)_aSiO_{\frac{3-a}{2}}$,

le symbole a représentant 1 ou 2.

La quantité introduite de motifs vinylés étant telle qu'elle représente 0,2 à 8 %, de préférence 0,3 à 7 %, du poids des copolymères B modifiés, donc constitués des motifs $(CH_3)_3SiO_{0,5}$, $SiO_2$ et $CH_2{=}CH(CH_3)_aSiO_{\frac{3-a}{2}}$, le rapport molaire

$(CH_3)_3SiO_{0,5}/SiO_2$ étant toujours compris entre 0,4/1 et 1,2/1 inclus.

0191261

Office européen des brevets

# RAPPORT DE RECHERCHE EUROPEENNE

Numéro de la demande

EP 85 42 0232

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,X | US-A-2 811 408 (O.A. BRALEY) * Revendications 1-9; colonne 1, lignes 50-59; colonne 2, ligne 5-20, 45-50 * | 1 | B 29 C 33/64<br>C 08 L 83/04 //<br>(C 08 L 83/04<br>C 08 L 83:04 ) |
| D,Y | GB-A-1 041 870 (DOW CORNING) * Revendication 1; page 1, lignes 10-41 * & FR - A - 1 448 165 | 1 | |
| Y | FR-A-1 565 500 (STAUFFER) * Résumé, points 1,2; page 3, colonne de gauche, paragraphe 3 * | 1 | |
| Y | US-A-3 872 038 (W.K. ADAMS) * Revendication 1; colonne 2, lignes 17-30, 31-41 * | 1 | |
| A | GB-A-1 199 592 (DOW CORNING) * Revendications 1-5 * | 1 | DOMAINES TECHNIQUES RECHERCHES (Int. Cl.4)<br>C 08 L<br>C 09 D<br>B 29 C |

Le présent rapport de recherche a été établi pour toutes les revendications

| Lieu de la recherche | Date d'achèvement de la recherche | Examinateur |
|---|---|---|
| LA HAYE | 24-04-1986 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82